# EUROPEAN PATENT APPLICATION

(11) **EP 2 940 401 A1**
(43) Date of publication of application: **04.11.2015**
(21) Application number: 13867209.2
(22) Date of filing: 26.12.2013
(51) Int. Cl.: F24J 2/46, F24J 2/05, F24J 2/14

(54) **DEVICE FOR CONNECTION BETWEEN ADJACENT SOLAR RECEIVER TUBES**

(30) Priority: 27.12.2012 ES 201201278
(71) Applicant: Abengoa Solar New Technologies, S.A., 41014 Sevilla (ES)
(72) Inventor: GÓMEZ RUIZ, Eduardo, E-41014 Sevilla (ES); BELLO FERNANDEZ, Azucena, E-41014 Sevilla (ES); NUÑEZ BOOTELLO, Juan Pablo, E-41014 Sevilla (ES); MARTÍNEZ SANZ, Noelia, E-41014 Sevilla (ES); BURGOS SERRANO, Sergio, E-41014 Sevilla (ES); RICO SÁNCHEZ, Juan Ángel, E-41014 Sevilla (ES); PELÁEZ FOMBELLIDA, Javier, E-41014 Sevilla (ES)
(74) Representative: Garcia-Cabrerizo y del Santo, Pedro Maria
(86) International application number: PCT/ES2013/000278
(87) International publication number: WO 2014/102405

(57) **Abstract**

Device for connection between adjacent solar receiver tubes of the type which are at the end of the solar receiver tube (1) to be joined with another adjacent solar collector tube, comprising:
- An expansion compensating element with at least two concentric bellows (7, 8) that are connected to each other and to a rigid ring (9) by means of a welded joint, which keeps them concentric in the expansion and compression process and joined to the glass tube (4) by the cover (12) and glass- metal transition element (21),
- A connection flange (5) to connect the solar receiver tube (1) to the one adjacent thereto, the flange (5) being a round metal plate with a hole that houses the absorber tube (3),
- Some through bolts (20) passing through the connection flange (5) to attach it with flange of the adjacent receiving tube (1).

## Description

### Field of the Invention

The present invention falls within the field of high solar concentration technologies, particularly within solar receivers, a solution for the expansion compensator and its coupling to the absorber tube and the glass tube and the coupling between adjacent receiver tubes.

### Background of the invention

The general principle of solar thermal technology is based on the concept of concentrating solar radiation generally to produce steam, which is then used in conventional power plants.

Capturing solar energy is one of the biggest challenges in the development of thermoelectric plants. There are two types of solar concentrators: line-focus concentrators and point-focus concentrators. Line-focus concentration is easier to install in having less degrees of freedom, but has a lower concentration factor and thus can achieve lower fluid temperatures than those in the point-focus concentration technology.

That is why the aim is to progress in the development of the receiver tubes used in line-focus concentration to try to increase their collector efficiency and reduce heat loss, so that the overall performance of the solar field is increased.

In general, a receiver tube consists of two concentric tubes between which vacuum is created. The inner tube, through which the heated fluid or heat transfer fluid circulates, is metallic and the outer tube is glass, usually borosilicate. The expansion compensating device is placed between the two tubes so as to allow movement in the longitudinal direction of the tubes and ensure a vacuum, absorbing the tensions that are created by the difference between the expansion coefficients of metal and glass.

Said compensating expansion device usually consists of a folding bellows which binds to the metal tube by a coupling element and to the glass tube by a glass-metal transition element.

Various developments for this coupling element are known in the prior art; in US 7,013,887B2 said coupling element consists of a cylindrical or conical body extending in the longitudinal axis of the metal tube and is welded to the metal tube at one end and to the compensating device at the other end. The compensating device in this invention is located in the space between the steel tube and borosilicate tube wherein its waves primarily work by compression when the steel tube expands.

In WO/2011042580A1 the coupling element between the absorber tube and the expansion compensating device is called vessel, being welded to both elements. WO 2011 / 098622A1 shows an expansion compensating device also welded to the vessel that employs asymmetrical twin waves with the specific feature that while some waves work by tractions, others do so by compression.

Moreover, the glass- metal transition elements are described for example in US 1,293,441 or US 6,324,870 B1 and have the property of having similar coefficients of expansion to those of glass.

The expansion compensating device is usually attached to the metal tube by means of a connecting element as described above. This element usually has the unique function of connecting the two elements. Also, an additional process of element is required (e.g. metal tube orbital welding) for the connection of a tube with its adjoining receptor.

The expansion compensator devices and connection devices known in the prior art have important geometric limitations as they only allow coordination concentrically between the two main tubes.

In the state of the art of solar technology no solutions are known for expansion compensators and their connection in tubes with eccentricity between the absorber tube and the glass tube.

The advantages of having receiver tubes wherein the absorber tube is positioned eccentrically to the glass tube, is that one of the areas of the plane transverse to the tube, increases the distance between said absorber tube and the borosilicate tube, allowing interior or exterior mirroring of glass tube, as a secondary focus, reflecting the sun rays which do not fall on the absorber tube after reflection on the primary reflector, thus increasing the concentration and homogeneity of the concentrated radiation onto the absorber tube. This homogeneity results in lower thermal stresses, thus improving the thermal and structural performance of the assembly.

As a result of the foregoing, there is an increase in fluid heat gain. Moreover, the optical enhancement of implementing a secondary reflector together with the eccentricity between the two tubes means that the distance between the two is greater than that of the concentric receiver tubes of the prior art, causing the temperatures of the borosilicate tube to decrease, the greater the distance from the heat source, which in this case is the steel tube, with the advantages that this entails in reducing stresses in the glass-metal transition element, in the expansion compensator element and the mirrored area of the glass, acting as a secondary reflector.

Therefore, the present invention aims to devise a new device which, in solar receivers, allows both eccentricity between tubes and the application to concentric tubes, to absorb the expansions that occur between them, to maintain the seal to ensure no vacuum loses in the annular zone between the two tubes and to allow the coupling of a receiver tube with its adjoining one.

### Description of the invention

The present invention relates to a device for connection between adjacent solar receiver tubes. This device has a double expansion compensator and a coupling device between said compensator and the absorber and glass tubes, the absorber tube and the glass tube preferably being eccentric relative to each other.

The expansion compensator consists of a double device and coupling of it to the tube is made by a connection flange, whose geometry is described below. The function of the connection flange is to connect the compensator to the absorber tube, to maintain sealing and allow connection between adjacent receiver tubes. In the case of eccentric tubes it also ensures eccentricity. The new expansion compensator is formed by at least two concentric bellows joined in series by a rigid ring which keeps them concentric in the expansion and compression process. The coupling ring between bellows enables the bellows to be placed at different levels and concentrically, allowing one to work primarily by traction while the other works by compression. Consequently, the length of the compensation device is shortened to approximately half its original length and thereby the yield of receiver uptake is increased ensuring compensation of the difference in expansion between the absorber metal tube and the borosilicate tube.

The flange also allows attaching a receiver tube with its adjoining tube such that the position of the receiver tubes as a whole is that optically predetermined relative to the primary reflector (for example in the event of a secondary focus, the flange makes it possible to locate in an unequivocal position a tube and its adjoining tube and therefore set the correct position of the secondary focus relative to the primary focus).

In a first preferred embodiment, this coupling between adjacent tubes is performed by situating the connection flanges of the receiver tubes opposite each other, such that a number of male embossments existing on the outer surface of a flange are securely assembled to a series of female embossments on the adjacent flange and vice versa, then fixing one flange to another by through-screws or threaded-end shafts.

In the case of eccentric tubes, the connection flange in turn determines the position between the inner metal tube and the compensating device (borosilicate concentric tube) in its transverse direction and results in a positioning without concentricity between them that creates a sufficient distance between the absorber tube and borosilicate tube so as to allow in the area of greater distance between them, the existence of a secondary focus adhered to the inner or outer surface of the borosilicate tube.

To ensure tightness and sealing there is a sealed connection device or washer which is housed between the two connection flanges contiguously to the inner metal tubes. Said device has the same inner diameter as the metal tube and a greater thickness than this and ensures the sealing of the fluid by suitable clamping between flanges.

Also, in a second preferred embodiment of the present invention, the sides of the connection flange of the receiver tubes to be joined do not touch each other but are spaced a sufficient distance to weld to each connection flange a watertight screw connector which allows joining two receiver tubes by a connector tightening nut. This couples is made possible by each receiver tube having a male end flange and a female end flange. Both ends are joined by a watertight screw connector tightening nut. The connector ensures the tightness of the coupling by the existence of a continuous perimeter of contact between male and female. The perimeter of contact is achieved by providing the male contact surface with a spherical shape and the female contact surface with a conical shape. Besides, the watertight screw connector tightening nut, which ensures continuous contact between male and female, has a cavity with a tapered finish for receiving a shaft and ensuring proper tightening in the assembly process. Through-screws or threaded-end through-shafts are also used which serve to transversely pre-set a connection flange opposite the connection flange of the adjacent receiver tube and ensure parallelism between the two.

Thanks to these through-screws or threaded-end through-shafts it is possible to coordinate the position between consecutive receiver tubes and prevent rotation between receiver tubes by tightening the connector, these elements, along with the connector and the flanges allow consolidation both of the mechanical coupling of tubes, and the coupling of their support to the parabolic trough collector structure.

With the design of the present invention, the receiver tubes are connected in the solar plant without orbital welding, enabling the connection and disconnection between pipes and the desired positioning between the absorber tube and the glass tube, even when there is eccentricity between them, and between the receiver tube as a whole and the primary reflector.

### Description of the drawings

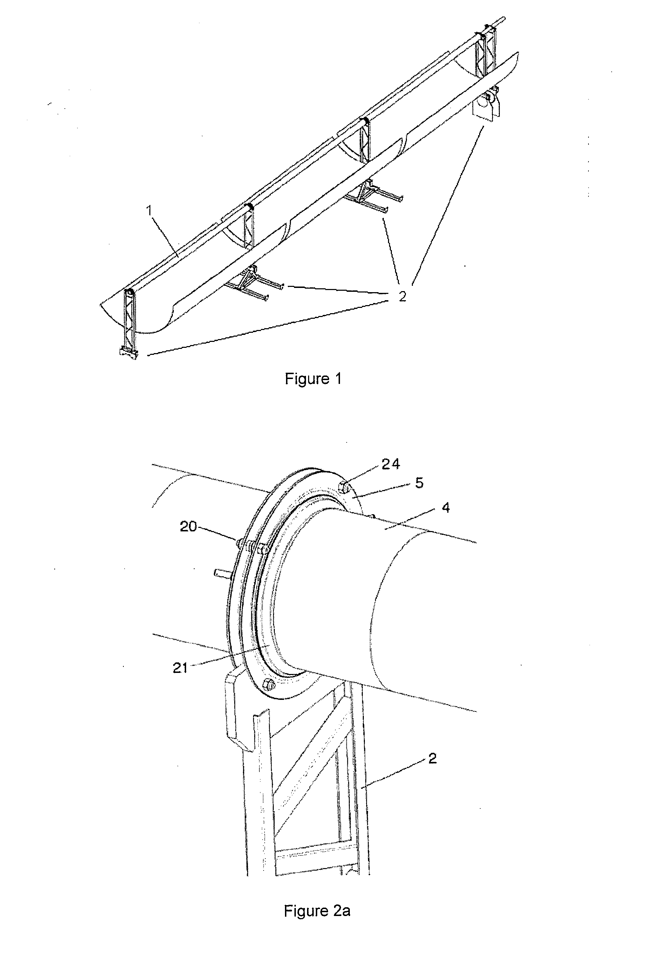

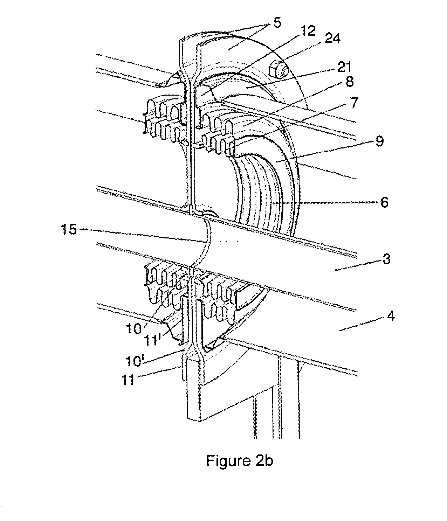

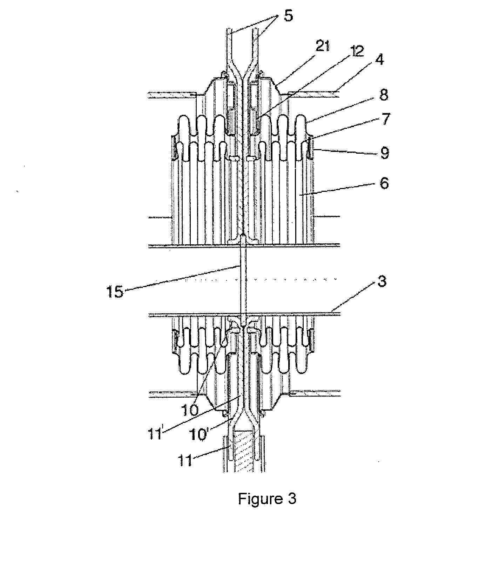

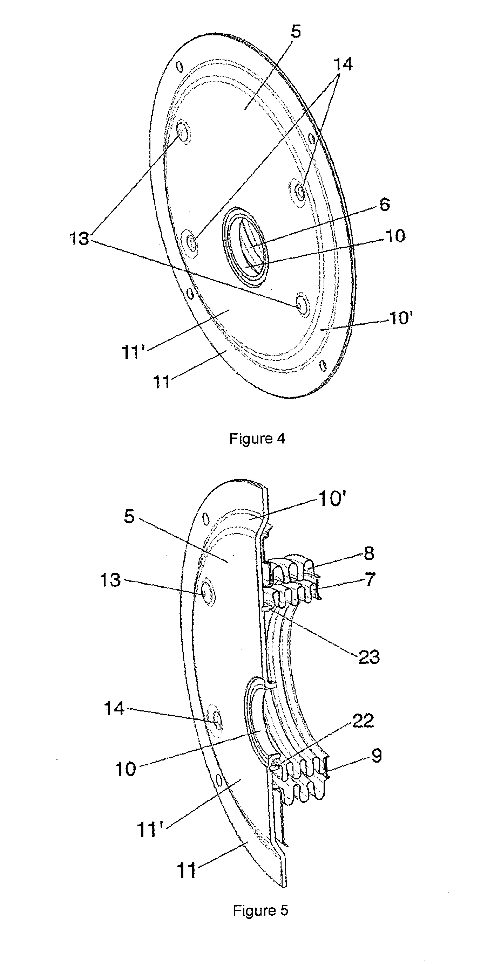

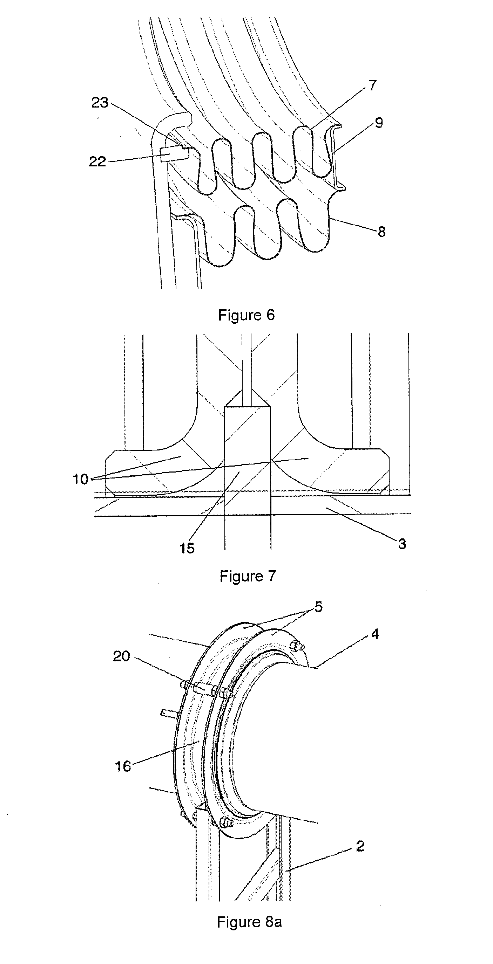

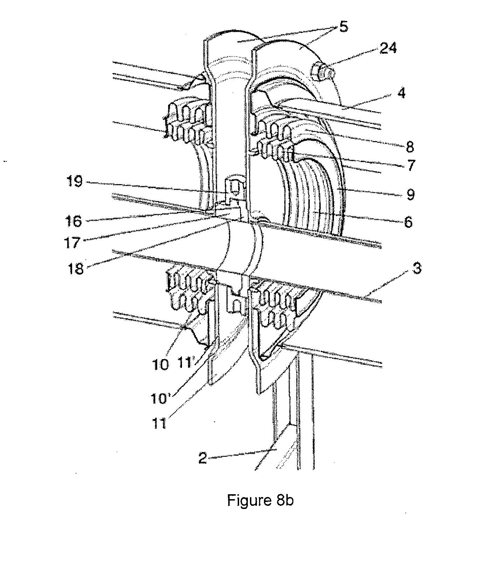

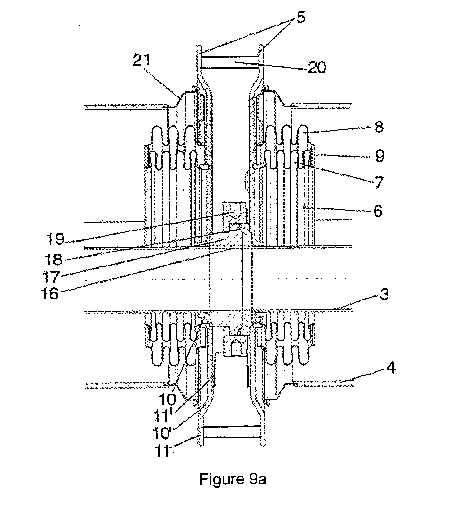

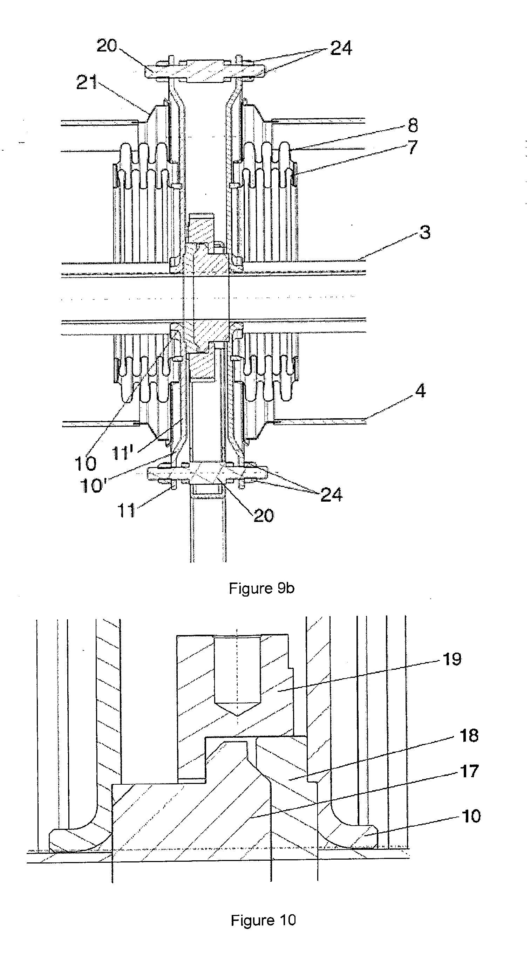

To complete the description being made and in order to aid a better understanding of the invention, a set of drawings is accompanied wherein, by way of illustration and without limiting the scope of the invention, the following has been represented:
▪ Figure 1: Overview of solar receiver tube.
▪ Figure 2a isometric view of two receiver tube ends connected by the coupling device of a first preferred embodiment.
▪ Figure 2b: Detail of section of 2a
▪ Figure 3: Elevation section of two receiving tube ends connected by the coupling device of a first preferred embodiment.
▪ Figure 4: front view of the flange-compensator assembly according to the first preferred embodiment of the invention.
▪ Figure 5: Section of the flange-compensator assembly according to the first preferred embodiment of the invention.
▪ Figure 6: Detail of the lower part of Figure 5: internal bellows connection with connection flange.
▪ Figure 7: Detail of the airtight coupling device or washer integrated in the coupling device of a first preferred embodiment.
▪ Figure 8a an isometric view of two receiver tube ends connected by the coupling device of a second preferred embodiment.
▪ Figure 8b: Detail of section of figure 8a
▪ Figure 9a: Elevation section of two receiver tube ends connected by the coupling device of a second preferred embodiment.
▪ Figure 9b: Elevation section of two receiver tube ends connected by coupling device of a second preferred embodiment.
▪ Figure 10: Detail of the airtight screw connector in the coupling device of a second preferred embodiment.

The references of the figures represent:
1. Solar receiver tube
2. Receiver tube supports
3. Metal absorber tube
4. Borosilicate outer tube
5. Connection flange
6. Compensator device
7. Inner bellows of the compensator device
8. Outer bellows of the compensator device
9. Rigid bellows connection ring of compensator device
10. Inner neck of the connection flange
10 '. Fold in the reverse direction to the neck of the connection flange
11. Outer end of the connection flange
11 '. Flat transition between the inner neck (10) and the fold (10')
12. Cover
13. Male embossment of the connection flange
14. Female embossment of the connection flange
15. Airtight connecting device or washer of the first preferred embodiment
16. Airtight screw connector of the second preferred embodiment
17. Male of the airtight screw connector of the second preferred embodiment
18. Female of the airtight screw connector of the second preferred embodiment
19. Tightening nut of the airtight screw connector of the second preferred embodiment
20. Threaded end through shafts
21. Glass-metal transition element
22. Flange-bellows connecting ring
23. Step of the flange-bellows connecting ring
24. Nuts

### Preferred embodiment of the invention

For a better understanding of the invention, described below is the device for connection between adjacent solar receiver tubes, according to two preferred embodiments. Figure 1 shows a parabolic trough solar collector wherein the receiver tube (1) in question in this invention and its various supports (2) are shown. Each parabolic trough solar collector has several receiver tubes (1) connected by their ends.

Figure 2a shows an isometric view of two ends of receiver tube connected by the coupling device of the invention in a first preferred embodiment. This external view shows that the attachment comprises a flange (5) with threaded end through shafts (20) and nuts (24). These threaded through shafts facilitate installation, prefixing the placing of a flange, and prevent any possible radial displacement of one flange relative to the other. The position of these shafts is ensured by the threading at its ends with the nuts (24). The glass-metal transition element (21) and the outer glass tube (4) are also observed.

Figures 2b and 3 show the section detail of the coupling device in according to the first preferred embodiment.

Each receiver tube (1) is formed generally by a borosilicate glass outer tube (4), and a generally metallic inner absorber tube (3), through which the heat transfer fluid circulates. At each end of the tube (1) compensating expansion devices (6) are positioned, each comprising at least two concentric bellows, the inner one (7) and the outer one (8) connected in series via a perimeter welding with a rigid ring (9).

Figures 4, 5 illustrate how said flange connection (5) consisting of a round metal plate with two faces, the outer face is the face nearest to the adjoining flange and the inner face is the face that connects with the expansion compensating element (6). This metal plate has a hole into which the absorber tube (3) is introduced; in this case the hole is not concentric with respect to its outer circumferential edge. In the hole there is a rounded fold towards the inner face of the flange, which forms an inner neck (10) which facilitates welding the metal tube (3). In the connection flange (5) there is a second fold (10 ') in the opposite direction to the neck (10) and located on the outer face of the connection flange (5). The function of the fold (10 ') is to increase the distance between two adjacent flanges (5). Between the inner neck (10) and the outer fold (10 ') there is a flat transition zone (11') and whose direction is perpendicular to the receiver tube (1). The outer end (11) of the flange (5) is flat and parallel to the receiver tube supports (2) in order to facilitate the connection between the flange (5) and said supports (2).

In a first embodiment of the invention, the outer face of the connection flange (5) has several female embossments (14) and several male embossments (13) that facilitate connecting the flanges of adjacent receiver tubes (1), and the desired positioning between them.

On the inner side of the connection flange (5) the compensating device (6) is welded by its inner part through a flange-compensator connection ring (22), said ring (22) being fixed to a circular groove located on the inner face of the flange (5), and having at its smaller diameter a shoulder (23) which facilitates the welding (perimeter welding with filler) of the inner bellows of the expansion compensating device (7) to said ring (22) thus connecting the compensator (6) and connection flange (5). Said compensating device (6) is formed by at least two concentric bellows, inner bellows (7) (with the smallest diameter) and outer bellows (8) (with a larger diameter) connected in series by means of a perimeter welding with a rigid ring (9) which keeps them concentric in the expansion and compression process. The rigid ring (9) connecting the bellows (7, 8) allows the bellows to be placed at different levels and concentrically, allowing one to work primarily by traction while the other works by compression. The outer bellows (8) -cover (12) connection, is performed by parallel welding without filler (fusion welding).

The compensating device (6) allows the airtight connection between the borosilicate tube (4) and the metal tube (3) cushioning expansion differences occurring between them. The borosilicate tube (4) is attached to the compensating device by means of the cover (12) and glass - metal transition element (21), said cover (12) being welded to the outer end of the bellows (8) of the compensating device (6). While the end of the inner bellows (7) of the compensating device (6) is connected with the inner face of the connection flange (5) by means of a welded joint to a ring (22) which has a shoulder (23). In turn the connection flange (5) is welded to the metal tube (3) through the inner neck (10) to form an enclosed sealed chamber and in which the vacuum is applied.

The receiver tube (1) thus comprises two connection flanges (5), at each end, which allows attachment of a receiving tube (1) with the adjoining tube.

Figure 7 is a detail of the connection flange (5) of the first preferred embodiment of the invention showing the coupling of steel tubes (3) through a sealed joint washer (15) situated between the ends of the metal tubes (3).

Figures 8a, 8b and 9a, 9b correspond to a section and an end elevation view of a receiver tube embodying the present invention in a second preferred embodiment. In this embodiment the outer faces of the connection flanges (5) of the pipes to be joined do not touch each other but are spaced with a sufficient distance to weld to each connection flange (5) an airtight screw connector (16) enabling to join the receiver tubes joined by a connector tightening nut (19). To make this coupling possible, each receiver tube (1) has a flange with a male end (17) and a female end (18). Both ends are joined by an airtight screw connector tightening nut (19) having a threaded housing for a shaft, in order to ensure sealing. One can observe the existence of threaded end through shafts (20) used to transversely pre-set a connection flange (5) opposite another and ensure parallelism between the two, additionally using nuts (24) to limit the separation between the two flanges.

Optionally both in the first and second preferred embodiment, at least one of the threaded end through shafts (20), may have a different shape to the rest, thus serving as a reference for positioning the secondary reflector of the receiver tubes and the primary reflectors, along the different collectors.

Figure 10 is a detail of the connection flange (5) of the second preferred embodiment of the invention showing the coupling of two metal absorber tubes by means of a sealed threaded coupling device that is placed between the male (17) and female (18) ends of two connection flanges (5) each belonging to adjacent receiver tubes. This device consists of one connector in which the male contact surface shape is spherical and the female contact surface is conical, so that there is a contact perimeter which ensures the tightness of the joint. The detail of the tightening nut of the airtight screw connector (19) is shown having a tapered finish cavity for receiving a shaft and ensuring proper clamping in the assembly process. Thus, a solar receiver tube (1) can be attached to its adjoining tube in the solar plant allowing, without orbital welding, connection and disconnection between tubes and the desired positioning between the absorber tube and glass tube and between the receiver tube as a whole and the primary reflector.

## Claims

1. Device for connection between adjacent solar receiver tubes of the type which are placed at the end of the solar receiver tube (1) to be joined with another solar receiver tube, the solar receiver tube (1) being formed by an inner metal absorber tube (3) and an outer glass tube (4) with vacuum between them and the tube (1) having a cover (12) and
a glass- metal transition element (21), **characterized in that** the coupling device comprises:
- An expansion compensating element (6) with at least two concentric bellows (7, 8) connected in series by means of welding to a rigid ring (9) which keeps them concentric in in the expansion and compression process and attached to the glass tube (4) by the cover (12) and the glass- metal transition element (21),
- A connection flange (5) to connect the solar receiver tube (1) with its adjoining tube, the flange (5) being a round metal plate with an outer face (face nearest to the adjoining flange) and an inner face (face which connects to the expansion compensating element (6)) and with a hole into which the absorber tube (3) is introduced,
- Through-screws or threaded end through shafts (20) extending through the connection flange (5) to attach it to the flange of the adjacent receiver tube (1).

2. Device for connection between adjacent solar receiver tubes according to claim 1, **characterized in that** the hole where the absorber tube (3) is inserted has a rounded fold to form an inner neck (10) which facilitates welding to the absorber tube (3).

3. Device for connection between adjacent solar receiver tubes according to claim 2, **characterized in that** the borosilicate tube (4) joins to the compensating device by means of the cover (12) and glass- metal transition element (21), said cover (12) being welded to the outer end of the bellows (8) (bellows with a larger diameter) of the compensating device (6),

4. Device for connection between adjacent solar receiver tubes according to claim 2, **characterized in that** the flange further comprises: a fold (10 ') in the opposite direction to the inner neck (10) and located on the outer face of the connection flange (5) whose function it is to increase the distance between two adjoining flanges (5), a flat transition area (11 ') and whose direction is perpendicular to the receiver tube (1) between the inner neck (10) and the outer fold (10 ') and an outer end (11) of the flange (5) being flat and parallel to the supports of the receiver tube (2), in order to facilitate the connection between the flange (5) and said supports (2).

5. Device for connection between adjacent solar receiver tubes according to claim 1, **characterized in that** the inner face of the connection flange (5) is welded to the compensating device (6), through a flange-compensator connection ring (22), said ring (22) fixed to a circular groove located on the inner face of the flange (5), and having at its smaller diameter, a shoulder (23) which facilitates the perimeter welding with filler of the inner bellows of the expansion compensating device (7) to said ring (22) thus connecting the compensator (6) and connection flange (5).

6. Device for connection between adjacent solar receiver tubes according to claim 1, **characterized in that** in the flange (5), the hole embracing the absorber tube (3), is not concentric relative to the outer circular edge of the flange (5).

7. Device for connection between adjacent solar receiver tubes according to claim 6 **characterized in that** between the absorber tube (3) and the glass tube (4) there is a secondary reflector adhered to the inner or outer surface of the glass (4).

8. Device for connection between adjacent solar receiver tubes according to claim 1, **characterized in that** in the connection flange (5) there is a series of female embossments (14) and of male embossments (13), wherein the male embossments (13) are assembled in the female embossments (14) of the flange (5) of the adjacent receiver tube (1).

9. Device for connection between adjacent solar receiver tubes according to claim 8, **characterized in that** it has a sealed joint or washer (15) which is housed between the connection flanges (5) of the receiver tubes (1) at the ends of the metallic absorber tubes (3) the washer (15) having the same inner diameter as the metal absorber tube (3) and a thickness greater than this.

10. Device for connection between adjacent solar receiver tubes according to claim 1, **characterized in that** each receiver tube (1) has a connection flange (5) at each end, one with a male end (17) and the other with a female end (18).

11. Device for connection between adjacent solar receiver tubes according to claim 10, **characterized in that** the male contact surface (17) is spherical and the female contact surface (18) is conical.

12. Device for connection between adjacent solar receiver tubes according to claim 11, **characterized in that** there is a tightening a nut (19) with a conical cavity which houses a shaft ensuring adequate tightening of the nut (19), which ensures continuous contact between male (17) and female (18).

13. Device for connection between adjacent solar receiver tubes according to claim 1, **characterized in that** there are nuts (24) to limit the separation between the two flanges.

14. Device for connection between adjacent solar receiver tubes according to claim 1, **characterized in that** one of the through-bolts or threaded end through shafts (20), has a different shape from the rest.
